# EUROPÄISCHE PATENTANMELDUNG

(11) **EP 2 591 877 A1**
(43) Veröffentlichungstag der Anmeldung: **15.05.2013**
(21) Anmeldenummer: 11188752.7
(22) Anmeldetag: 11.11.2011
(51) Int. Cl.: B23K 26/34, F01D 5/00

(54) **Umschmelzverfahren unter reaktivem Gasgemisch**

(71) Anmelder: Siemens Aktiengesellschaft, 80333 München (DE)
(72) Erfinder: Ott, Michael, 45470 Mülheim an der Ruhr (DE); Piegert, Sebastian, 10777 Berlin (DE); Reinkensmeier, Ingo, 58730 Fröndenberg (DE)

(57) **Zusammenfassung**

Durch die Verwendung eines Reaktivgases beim Laser-Umschmelzen kann eine Vorabreinigung des Risses zur Entfernung von Oxiden vermieden werden.

## Beschreibung

Die Erfindung betrifft ein Umschmelzverfahren unter einem reaktiven Gas oder Gasgemisch, das Verunreinigungen von der umzuschmelzenden Zone entfernt.

Hochtemperaturbauteile, wie z.B. Turbinenschaufeln, die im Einsatz waren, weisen manchmal Risse auf, die bis in das Substrat durch die Schichten hindurchgehen und dort oxidieren.

Für die Wiederverwendung der Turbinenschaufeln müssen die Risse geschweißt oder mit Hochtemperaturlot wieder gefüllt werden.

Vorab müssen die Oxide aber entfernt werden, da sonst keine Benetzung mit dem Schweiß- oder Lotmaterial stattfinden kann. Daher erfolgt in der Regel vorab in einem separaten Prozess die Reinigung von Defekten von Oxiden über eine FIC-Reinigung (Flouride Ion Cleaning).

Dies ist jedoch eher zeitaufwändig und stellt einen separaten Verfahrensschritt dar.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: schematisch eine Vorrichtung, mit der das Verfahren durchgeführt werden kann,
- Figur 2: ein bearbeitetes Bauteil,
- Figur 3: eine Turbinenschaufel,
- Figur 4: eine Liste von Superlegierungen.

Die Beschreibung und die Figuren stellen nur Ausführungsbeispiele der Erfindung dar.

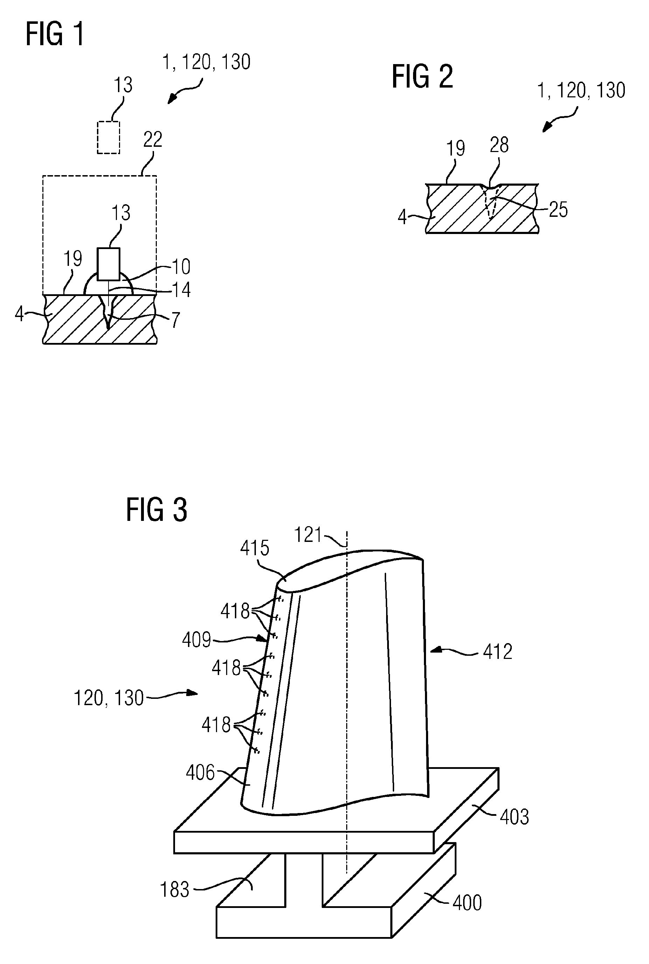

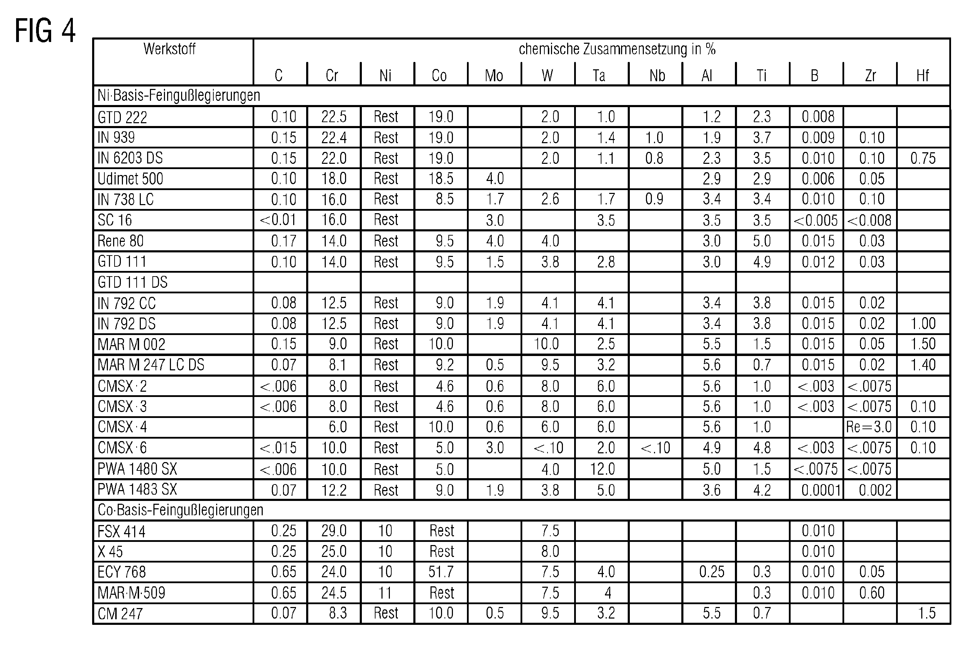

Figur 1 zeigt ein Bauteil 1, 120, 130 mit einem Substrat 4. Das Substrat 4 ist insbesondere nickel- oder kobaltbasiert und weist ganz insbesondere eine Legierung gemäß Figur 4 auf.

Das Substrat 4 weist als einen Defekt einen Riss 7 auf, in dem Oxide vorhanden sind (Oxide nicht dargestellt).

Dieser Riss 7 mit Oxiden soll nun zugeschweißt bzw. umgeschmolzen werden, damit das Bauteil 1, 120, 130 wieder verwendet werden kann (Refurbishment).
Dazu wird in einem ersten Schritt mittels eines Schweißgeräts, insbesondere eines Lasers 13, das Substrat 4 im Bereich des Risses 7 umgeschmolzen. Dabei wird der Riss im Bereich des Laserstrahls 14 gleichzeitig mit einem Reaktivgas oder einer Reaktivgasmischung umspült, die um das Schweißgerät 13 herum vorhanden ist.
Die Zufuhr der Gase kann durch eine entsprechende Düse oder eine entsprechende Gestaltung der Laserdüse erfolgen.

Ebenso kann auch eine Umhüllung 22, hier gestrichelt angedeutet, vorhanden sein, in dem ein Reaktivgas oder eine reaktive Gasmischung 10 vorhanden ist und der Laserstrahl vorzugsweise durch ein Fenster (nicht dargestellt) der Umhüllung 22 auf das Substrat 7 in den Bereich des Risses 7 gelangt.

Durch das Reaktivgas 10 werden die Oxide während des Umschmelzens reduziert und verdampfen.
Dies geschieht sowohl vor als auch während des Umschmelzprozesses, so dass die Oxide in Rissen 7 reduziert werden und verbleibende Oxide auf der Schmelze reduziert werden.

Diese erfindungsgemäße Insitu-Reaktion der Oxide während des Umschmelzens ist durch das Aufschwemmen der Oxide auf der Schmelze bei geringer Dichte der Oxide möglich.

Ebenso können Atmosphäre und Temperatur in einer Prozesskammer 22 oder dem Umschmelzbereich individuell auf das Bauteil 4 abgestimmt werden.

Als Reaktivgas wird vorzugsweise ein Halogenid, ganz insbesondere Fluorwasserstoff (HF) verwendet, vorzugsweise mit einem Anteil von 6 - 30vol% in einem Inertgas, insbesondere Argon (Ar) oder Stickstoff (N₂).

So wird sehr schnell ein Riss verschlossen, ohne dass vorab eine aufwändige und zeitintensive Oxidreduktion durch gasförmige Halogenidionen bei hohen Temperaturen in einem Ofen vorab stattfinden muss.

Durch den Umschmelzprozess kann eine Mulde 28 im Bereich der Oberfläche 19 des Substrats 4 entstehen, wie es in Figur 2 dargestellt ist. In einem zweiten Prozess wird dann die Mulde 28 mit Material aufgefüllt. Dies kann durch bekannte Lötoder Schweißprozesse erfolgen. Das kann dadurch erfolgen, indem ein zweites Schweißgerät, insbesondere ein Laser, der zusätzlich Material an der Oberfläche aufbringen kann, ermöglicht, dass die Mulde 28, die durch das Umschmelzen durch das Schweißgerät 13 entsteht, direkt anschließend durch ein Auftragsschweißverfahren mittels des Schweißgeräts 16 aufgefüllt wird.

Als Material, das die Mulde 28 auffüllt, kann ein Lotmaterial, insbesondere eine Mischung aus dem Basismaterial des Substrats in einem Lotmaterial oder ein reines Lotmaterial oder reines Substratmaterial, ähnlich oder gleich die des Substrats 4, verwendet werden.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAIX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-2rO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Umschmelzen von Defekten (7) einer Oberfläche (19) eines Substrats (4),
bei dem das Umschmelzen unter Verwendung eines Reaktivgases oder Reaktivgasgemischs (10) erfolgt.

2. Verfahren nach Anspruch 1,
bei dem ein metallisches Substrat (4),
insbesondere ein nickel- oder kobaltbasiertes Substrat (4) umgeschmolzen wird.

3. Verfahren nach einem oder beiden der Ansprüche 1 oder 2, bei dem ein Laserumschmelzverfahren verwendet wird.

4. Verfahren nach einem oder mehreren der Ansprüche 1, 2 oder 3,
bei dem als Reaktivgas ein Halogenid,
insbesondere ein Halogenwasserstoff,
ganz insbesondere Fluorwasserstoff (HF) verwendet wird.

5. Verfahren nach einem oder mehreren der vorherigen Ansprüche,
bei dem keine chemische Reinigung,
insbesondere keine FIC-Reinigung,
des Defekts (7) vor dem Umschmelzen stattfindet.

6. Verfahren nach Anspruch 1 oder 4,
bei dem das Reaktivgas ein Gemisch aus Inertgas und Reaktivgas oder ein Reaktivgasgemisch enthält,
insbesondere 6vol% - 30vol% Inertgas aufweist,
ganz insbesondere Argon (Ar) und/oder Stickstoff (N₂).
